# EUROPEAN PATENT SPECIFICATION

(11) **EP 3 623 687 B1**
(45) Date of publication and mention of the grant of the patent: **02.12.2020**
(21) Application number: 19196306.5
(22) Date of filing: 10.09.2019
(51) Int. Cl.: F16P 1/02, E05B 65/00

(54) **INSPECTION DOOR**
WARTUNGSÖFFNUNG
PORTE D'INSPECTION

(30) Priority: 13.09.2018 FI 20185761
(43) Date of publication of application: 18.03.2020
(73) Proprietor: Raumaster OY, 26100 Rauma (FI)
(72) Inventor: JUNNILA, Juha, FI-26720 Monnanummi (FI); VÄHÄAHO, Olli-Pekka, FI-90570 Oulu (FI)
(74) Representative: Berggren Oy, Turku

(56) References cited:
- US-A- 5 410 841

## Description

### Object of the invention

The object of the invention is an inspection door according to the preamble of the enclosed independent claim. The object of the invention is further a material handling device, which comprises an inspection door according to the invention.

### Background of the invention

Hinged inspection doors, such as for example known from US 5 410 841, are used in devices belonging to material handling systems, such as, for example, conveyors and sieves, as well as in closed structures between devices, such as, for example, in connections, pipe systems and funnels, the purpose of which hinged inspection doors is to allow for short-term visual observation of the material flow and, possibly, also the internal parts of the device, securely from outside the device while the device is running, and to allow for the detaching and/or removal of any material that may be entangled inside the device and/or the dismantling of any formed material jam through the opened inspection door with a suitable tool while the device is stopped. The inspection door must be lockable so that it cannot open by itself. On the other hand, it must be easy to open so that the above-mentioned measures can be carried out as quickly and effortlessly as possible.

When the inspection door is opened while the device is running, it is possible that material from the material flow handled by the device is thrown out through the inspection door, which may pose a risk to the person conducting the inspection. To reduce this risk, it is known to use a relatively small-mesh protective net attached to the frame part of the inspection door, which net remains in place in front of the opening in the frame part of the inspection door, when the lid part of the inspection door itself is opened.

The purpose of the protective net is, on the one hand, to prevent the flying out of material fragments larger than its mesh size and, on the other hand, to prevent the person conducting the inspection from putting a tool or a limb inside the device while the device is running. The protective net may be attached to the frame part around the protective net for example by means of screws and nuts, or it may be on one edge hinged to the frame part and on the opposite edge locked to the frame part with one or more screws and nuts. Typically, the protective net is locked to the screw for example with a nut.

When inspection actions are taken through the inspection door while the device is stopped, the protective net can be opened by removing the screws and possible nuts using a suitable tool. One inspection door suitable for machines and devices is Zonador® (http://zonador.fi/zonador-8/), in which the protective net can be removed with a tool, if necessary. Using a locking of the protective net which can only be opened with a tool, it is attempted to prevent unnecessary opening of the protective net, which is a safety risk when the device is running. However, a major occupational safety shortcoming of such known solutions is that it does not force the user to lock the protective net in place before closing the inspection door lid part. Relatively small loose fastening nuts of the net can during installation be dropped by the user and lost, or the user can knowingly fail to install the nuts in place. If the protective net is not hinged, it can be left completely uninstalled. If the protective net is hinged, the user can turn it by its hinges into place in the frame part, but still leave it unlocked with screws and nuts.

Publication CN 2057206 presents a door with a hinged protective net, without a separate protective net locking mechanism. Publication EP 1365188 also presents an inspection door, which can be locked with a locking screw.

### Object and description of the invention

An object of the present invention is to reduce or even eliminate the above-mentioned problems in the prior art.

In particular, an object of the present invention is to provide an inspection door equipped with a protective net, in which the protective net must be locked in place before the lid part of the inspection door can be closed. Thus, an object of the invention is also to improve occupational safety.

In order to attain this object, the inspection door according to the invention is mainly characterized in what is shown in the characterizing part of the independent claim.

In other, dependent patent claims, some advantageous embodiments of the invention are presented.

A typical inspection door comprises
- a lid part that can be opened and closed
- a frame part, which has an opening, which the lid part covers when the lid part is closed,
- a protective net arranged in the opening in the frame part, which net is attached on hinges to the frame part, and
- a locking mechanism of the lid part, comprising a bolt arm, in the first end of which is arranged an opening cam and in the second end of which is arranged a bar which is substantially perpendicular to the bolt arm, wherein the locking mechanism can be opened and closed by rotating the opening cam, whereby the bolt arm turns by means of the bar in its second end.

A typical inspection door according to the invention additionally comprises a locking screw of the protective net, which being arrangeable in front of the protective net, preventing the opening of the protective net, and which locking screw is arranged in the frame part in such a way that it is not detachable. Additionally, the locking mechanism of the lid part of the inspection door according to the invention comprises a protrusion, which is attached to the bar set substantially perpendicular in relation to the bolt arm in the second end of the bolt arm of the locking mechanism, and which protrusion settles against the locking screw of the protective net when the lid part of the inspection door is closed.

A typical material handling device according to the invention comprises an inspection door according to the invention.

The object of the inspection door according to the invention is to ensure locking of the protective net in place before closing the lid part of the inspection door. The lid part of the inspection door according to the invention cannot be closed or locked by means of the locking mechanism until the locking screw of the protective net is placed in front of the protective net, preventing the protective net from being opened. The locking mechanism of the lid part of the inspection door according to the invention has a protrusion, which settles against the locking screw of the protective net when the lid part of the inspection door is closed. The protrusion of the locking mechanism and thus the bolt arm of the entire locking mechanism cannot be turned into place if the locking screw of the protective net has not been arranged in front of the protective net. The locking screw on the protective net is arranged in the frame part of the inspection door so that it is not detachable but the locking screw of the protective net can only be moved between the closed and open state, i.e. in front of the protective net and away.

The inspection door comprises a frame part and a lid part. Typically, the central part of the frame part has been cut off completely and a protective net is arranged in the formed opening. When closing the inspection door, the lid part covers the opening and the protective net. The protective net is some protective net suitable for the purpose, for example a metallic protective net with a small enough mesh size to prevent material from being flown out of the inspection door when the door is opened. Typically, the frame part of the inspection door according to the invention comprises edges extending outside the lid part, by which edges the frame part and thus the inspection door is attached in place.

The inspection door according to an advantageous embodiment of the invention is a hinged inspection door, whereby the lid part of the inspection door is attached to the frame part of the inspection door on hinges and can thus be opened and closed by means of the locking mechanism of the inspection door. The protective net arranged in the frame part of the inspection door according to the invention is attached to the frame part on hinges, whereby the protective net is attached by one side on hinges to the frame part or a structure related to the frame part. Thus, it is not possible to completely detach the protective net from its place, but it can be turned open, and when the protective net is closed the locking in place can be ensured with a locking mechanism according to the invention, which comprises the locking screw of the protective net and the protrusion arranged in the locking mechanism.

The locking mechanism of the lid part of the inspection door according to the invention comprises a bolt arm, in the first end of which is arranged an opening cam, and in the second end of which is arranged a bar set substantially perpendicular to the bolt arm, whereby the locking mechanism can be opened and closed by rotating the opening cam, whereby the bolt arm turns by means of the bar in its second end. The bar is typically attached to the frame part with some supports suitable for the purpose, which allow the bar to rotate. The locking mechanism is thus attached to the frame part of the inspection door. The bar attached to the bolt arm can be any suitable bar, pipe or similar, which allows the locking mechanism to turn. When the locking mechanism is locked, it is at the top of the bolt arm set in a groove or other suitable shaping in the lid part or in a separate part arranged in the lid part, whereby the bolt arm is substantially upright in relation to the frame part and locked in place by means of the opening cam. Typically, a separate part is arranged on the top surface of the lid part, above the top surface of the lid part, at the one end of which part there is a groove or formation designed to lock the locking mechanism, and at the other end of the part is arranged a hinged fastening mechanism of the lid part to the frame part. The locking mechanism of the inspection door according to the invention further comprises a locking screw of the protective net, which can be arranged in front of the protective net, preventing the opening of the protective net, and which locking screw is arranged in the frame part so that it is not detachable. In addition, the locking mechanism according to the invention comprises a protrusion, which is attached to the bar set substantially perpendicular to the bolt arm in the second end of the bolt arm, and which protrusion settles against the locking screw of the protective net when the lid part of the inspection door is closed and locked. The protrusion at the second end of the bolt arm of the locking mechanism is arranged tightly against the base of the locking screw of the protective net, when the inspection door is closed and locked. When the locking mechanism is opened, the opening cam of the locking mechanism is turned, whereby the bolt arm can turn by means of the bar set in its second end. The bolt arm is turned open, whereby the protrusion of the locking mechanism rises from in front of the locking screw of the protective net and thus the locking screw of the protective net can be opened by moving the locking screw away from in front of the protective net and the protective net can be opened. When the protective net is closed, it must also be locked in place by moving the locking screw in front of it, whereby the protrusion of the locking mechanism can fit to turn back into place and the lid part of the inspection door can be locked.

According to one embodiment of the invention, the protrusion attached to the bar set substantially perpendicular to the bolt arm in the second end of the bolt arm of the locking mechanism, is a fixed part of the locking mechanism. In an advantageous embodiment of the invention, the protrusion is, for example, welded onto the bar at the lower end of the bolt arm. The protrusion is shaped so that it can be positioned tightly against the locking screw on the protective net. In one embodiment of the invention, the protrusion is formed from a pipe, bar or similar. The locking mechanism is typically manufactured from metal, as is also the inspection door frame part and lid part.

In one embodiment of the invention, the frame part of the inspection door comprises edges around the protective net, which are substantially vertical in relation to the protective net. The protective net is typically set inside the edges substantially covering the entire opening in the frame part. In a typical embodiment of the invention, the locking screw of the protective net is arranged through the edge of the frame part around the protective net, which is substantially vertical in relation to the protective net. In a typical embodiment of the invention, the longitudinal direction of the locking screw is substantially parallel to the plane of the protective net and the locking screw is movable lengthwise between the open and closed state. The locking screw of the protective net can be any locking screw suited for the purpose, which can be mounted in a structure so that the complete removal of it from its position is prevented. In a typical embodiment of the invention, a locking nut or similar is arranged in the second end of the locking screw, which prevents the locking screw from being completely removed from its position, but allows moving the screw between the open and closed state.

In addition to the locking screw of the protective net according to the invention, the protective net may also be attached with other screws and/or nuts or similar attaching means.

The object of the frame part of the inspection door is to allow the inspection door to be attached to an object, where the inspection door is needed. Depending on the object or device, the inspection door may be placed on a vertical, horizontal or inclined surface. The inspection door may be arranged, for example, in a material handling device such as a conveyor, sieve, funnel, pipe system, connection or a similar sealed structure. The size of the inspection door may vary. In a typical case, the width and height of the opening in the frame part of the inspection door or the lid part of the inspection door is about 40 to 80 cm.

### Brief description of the figures

In the following, the invention is explained in more detail by reference to the enclosed drawings, in which
- Figure 1: shows an attaching manner for a protective net of an inspection door according to the state of the art,
- Figure 2: shows the structure of an inspection door according to an embodiment seen from above when the inspection door is closed;
- Figure 3: shows the structure of an inspection door according to an embodiment of the invention seen from the side when the inspection door is closed,
- Figure 4: shows the structure of a locking mechanism of an inspection door according to an embodiment of the invention, when the locking screw is set in front of the protective net,
- Figure 5: shows the structure of a locking mechanism of an inspection door according to an embodiment of the invention, when the locking screw of the protective net is opened and the lid part and protective net of the inspection door can be opened, and
- Figure 6: shows the structure of a locking mechanism according to an embodiment of the invention, without an opening cam.

### Detailed description of the figures

The same reference numbers have been used in the figures for corresponding parts. Not all the details of the inspection door are shown in the figures with reference numbers, and not every figure shows the reference numbers of all parts.

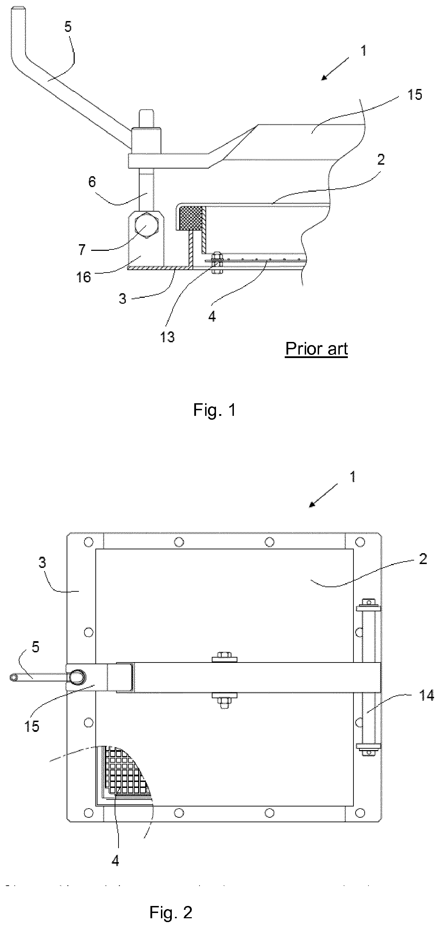

Figure 1 shows an inspection door according to prior art, which has a manner of attaching the protective net according to prior art. Figure 2 shows the inspection door from above, when the inspection door is closed. The inspection door 1 comprises a lid part 2 and a frame part 3. In the center of the frame part there is an opening, wherein is arranged a protective net 4, and which the lid part 2 covers, when the lid part is closed. In the inspection door according to prior art the protective net is attached in place with separate screws 13 or equivalent attaching means. The locking mechanism of the inspection door comprises a bolt arm 6, in the first end of which is arranged an opening cam 5 and in the second end of which is arranged a bar 7, which is substantially perpendicular to the bolt arm, whereby the locking mechanism can be opened and closed by rotating the opening cam 5, wherein the bolt arm 6 rotates by means of the bar 7 in its second end. The bar 7 is typically attached to the frame part with some brackets 16 suited for the purpose, which allow the bar to rotate. When the lid part 2 is closed, the bolt arm 6 of the locking mechanism is set to a part 15 attached to the top surface of the lid part. Part 15 is part of the lid part, which is arranged above the top surface of the lid part 2. As shown in Figure 2, one end of the part 15 has a groove or shaping meant for locking the locking mechanism, into which the bolt arm 6 of the locking mechanism settles, and in the second end of part 15 is arranged the hinged fastening mechanism 14 of the lid part to the frame part. The protective net 4 of the inspection door shown in Figure 1 can be opened by removing the screws 13 or the like and possible nuts. The protective net can be completely detached from the frame part by removing the screws 13 or the like. The lid part 2 of the inspection door can be closed and locked with a locking mechanism, even if the screws 13 or the like and possible nuts used to attach the protective net are not in place.

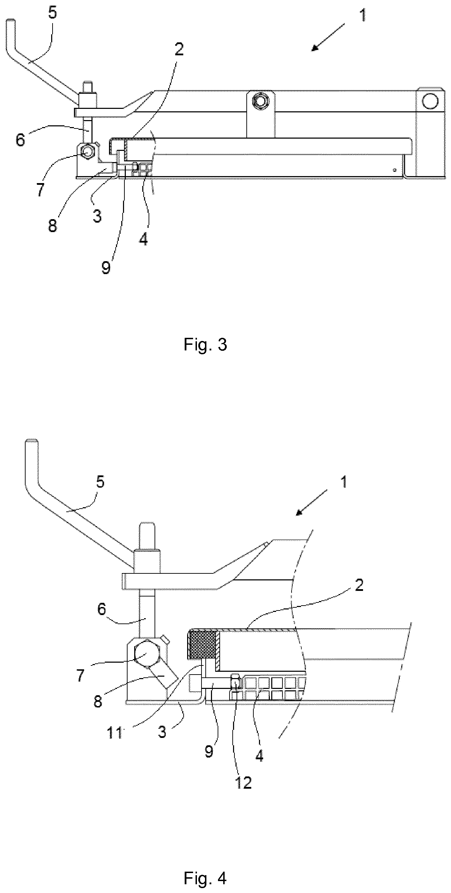

Figure 3 shows the structure of the inspection door according to an embodiment of the invention seen from the side, when the inspection door is closed and the locking mechanism is locked. The inspection door according to the invention is opened by rotating the opening cam 5, in the same way as the inspection door according to prior art. The protective net 4 is locked by turning the locking screw 9 inward, so that it settles in front of the protective net 4. In the second end of the bolt arm 6 of the locking mechanism is arranged a protrusion 8, which is attached to the bar 7 set substantially perpendicular to the bolt arm in the second end of the bolt arm 6 of the locking mechanism. The protrusion 8 settles against the locking screw 9 of the protective net when the lid part 2 of the inspection door is closed and the locking mechanism locked as shown in Figure 3. Figure 4 shows the structure of the inspection door according to an embodiment of the invention seen from the side, when the inspection door is closed, but the locking mechanism is already open, in which case the protrusion 8 is no longer against the locking screw 9. When the locking mechanism is opened by turning the opening cam 5, the protrusion 3 moves away from in front of the locking screw 9 and thus the protective net 4 locking screw 9 can be opened by moving it away from the front of the protective net. The locking screw 9 is arranged through the edge 11 of the frame part, which is substantially vertical in relation to the protective net around the protective net, so that it cannot fully be detached from place, but moved back and forth. A locking nut 12 or the like, which prevents the locking screw from being detached completely from its place, is mounted on the end of the locking screw 9.

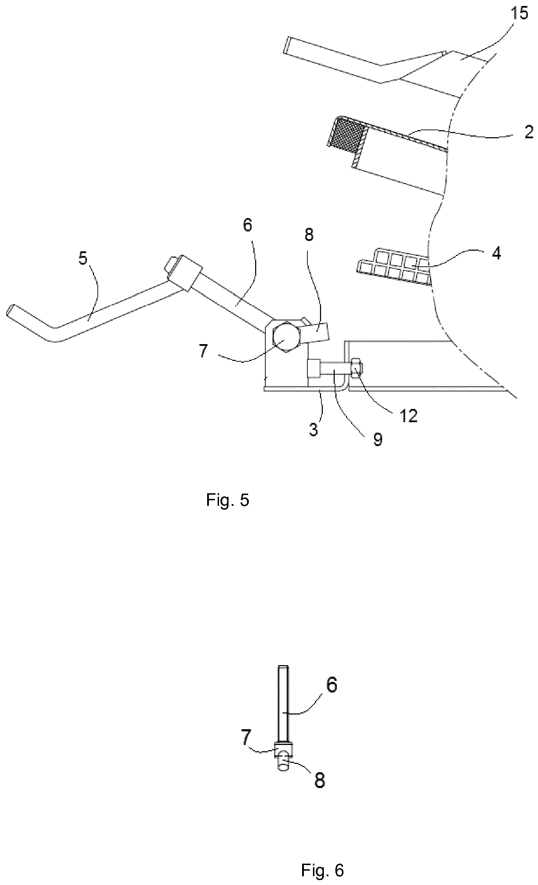

Figure 5 shows the structure of the inspection door locking mechanism according to an embodiment of the invention, when the locking screw of the protective net is opened and the lid part of the inspection door and the protective net is partially opened. The lid part 2 of the inspection door cannot be closed and locked before the protective net 4 is closed and the locking screw 9 is arranged in front of the protective net 4.

Figure 6 shows in more detail the structure of the locking mechanism according to an embodiment of the invention, without the opening cam. A bar 7 is attached to the lower end of the bolt arm 6 of the locking mechanism and the protrusion 8 according to the invention is further attached thereto.

## Claims

1. An inspection door (1), which comprises
- a lid part (2), which can be opened and closed
- a frame part (3), which has an opening, which the lid part (2) covers when the lid part is closed,
- a protective net (4) arranged in the opening in the frame part, which net is attached on hinges to the frame part,
- a locking mechanism of the lid part, which comprises a bolt arm (6), in the first end of which is arranged an opening cam (5) and in the second end of which is arranged a bar (7) which is substantially perpendicular to the bolt arm, wherein the locking mechanism can be opened and closed by rotating the opening cam (5), whereby the bolt arm (6) turns by means of the bar (7) in its second end,
**characterized in that** the inspection door further comprises a locking screw (9) of the protective net, which being arrangeable in front of the protective net, preventing the opening of the protective net, and which locking screw (9) is arranged in the frame part in such a way that it is not detachable, and the locking mechanism of the lid part comprises a protrusion (8), which is attached to the bar (7) set substantially perpendicular in relation to the bolt arm in the second end of the bolt arm (6) of the locking mechanism, and which protrusion (8) settles against the locking screw (9) of the protective net when the lid part of the inspection door is closed.

2. The inspection door according to claim 1, **characterized in that** the lid part (2) is attached to the frame part (3) on hinges.

3. The inspection door according to claim 1 or 2, **characterized in that** the protrusion (8) is a fixed part of the locking mechanism.

4. The inspection door according to any of the preceding claims, **characterized in that** the frame part (3) comprises edges (11) of the frame part which are substantially vertical in relation to the protective net around the protective net (4).

5. The inspection door according to claim 4, **characterized in that** the locking screw (9) of the protective net is arranged through the edge (11) around the protective net (4), which is substantially vertical in relation to the frame part and protective net.

6. The inspection door according to any of the preceding claims, **characterized in that** a locking nut (12) is arranged in the second end of the locking screw (9) of the protective net.

7. The inspection door according to any of the preceding claims, **characterized in that** the width and height of the opening in the frame part (3) of the inspection door is 40 - 80 cm.

8. A material handling device, which comprises an inspection door according to any of the preceding claims 1-7.

## Patentansprüche

1. Inspektionstür (1), umfassend
- ein Deckelteil (2), das geöffnet und geschlossen werden kann,
- ein Rahmenteil (3) mit einer Öffnung, die das Deckelteil (2) beim Schließen des Deckelteils abdeckt,
- ein Schutznetz (4), das in der Öffnung im Rahmenteil angeordnet ist, wobei das Netz an Scharnieren am Rahmenteil befestigt ist,
- einen Verriegelungsmechanismus des Deckelteils, der einen Bolzenarm (6) umfasst, in dessen erstem Ende ein Öffnungsnocken (5) angeordnet ist und in dessen zweitem Ende eine Stange (7) angeordnet ist, die im Wesentlichen senkrecht zum Bolzenarm ist, wobei der Verriegelungsmechanismus durch Drehen des Öffnungsnockens (5) geöffnet und geschlossen werden kann, wobei sich der Bolzenarm (6) mittels der Stange (7) an seinem zweiten Ende dreht,
**dadurch gekennzeichnet, dass** die Inspektionstür ferner eine Verriegelungsschraube (9) des Schutznetzes umfasst, die vor dem Schutznetz angeordnet werden kann, wobei das Öffnen des Schutznetzes verhindert wird, und wobei die Verriegelungsschraube (9) im Rahmenteil so angeordnet ist, dass sie nicht abnehmbar ist, und der Verriegelungsmechanismus des Deckelteils einen Vorsprung (8) umfasst, der an der Stange (7) angebracht ist, die im Wesentlichen senkrecht zu dem Bolzenarm am zweiten Ende des Bolzenarms (6) des Verriegelungsmechanismus eingestellt ist, und wobei der Vorsprung (8) an der Verriegelungsschraube (9) des Schutznetzes anliegt, wenn das Deckelteil der Inspektionstür geschlossen ist.

2. Inspektionstür nach Anspruch 1, **dadurch gekennzeichnet, dass** das Deckelteil (2) an Scharnieren am Rahmenteil (3) befestigt ist.

3. Inspektionstür nach Anspruch 1 oder 2, **dadurch gekennzeichnet, dass** der Vorsprung (8) ein fester Bestandteil des Verriegelungsmechanismus ist.

4. Inspektionstür nach einem der vorhergehenden Ansprüche, **dadurch gekennzeichnet, dass** das Rahmenteil (3) Kanten (11) des Rahmenteils umfasst, die im Verhältnis zum Schutznetz um das Schutznetz (4) im Wesentlichen vertikal sind.

5. Inspektionstür nach Anspruch 4, **dadurch gekennzeichnet, dass** die Verriegelungsschraube (9) des Schutznetzes durch die Kante (11) um das Schutznetz (4) angeordnet ist, die in Bezug auf das Rahmenteil und Schutznetz im Wesentlichen vertikal ist.

6. Inspektionstür nach einem der vorstehenden Ansprüche, **dadurch gekennzeichnet, dass** am zweiten Ende der Sicherungsschraube (9) des Schutznetzes eine Sicherungsmutter (12) angeordnet ist.

7. Inspektionstür nach einem der vorhergehenden Ansprüche, **dadurch gekennzeichnet, dass** die Breite und Höhe der Öffnung im Rahmenteil (3) der Inspektionstür 40 bis 80 cm beträgt.

8. Materialhandhabungsvorrichtung, die eine Inspektionstür gemäß einem der vorhergehenden Ansprüche 1 bis 7 umfasst.

## Revendications

1. Porte d'inspection (1), qui comprend
- une partie couvercle (2), qui peut être ouverte et fermée
- une partie cadre (3), qui a une ouverture, recouverte par la partie couvercle (2) lorsque la partie couvercle est fermée,
- un filet de protection (4) disposé dans l'ouverture de la partie cadre, lequel filet est fixé sur des charnières à la partie cadre,
- un mécanisme de verrouillage de la partie couvercle, qui comprend un bras de pêne (6), dans la première extrémité duquel est disposée une came d'ouverture (5) et dans la seconde extrémité duquel est disposée une barre (7) qui est sensiblement perpendiculaire au bras de pêne, dans laquelle le mécanisme de verrouillage peut être ouvert et fermé en faisant tourner la came d'ouverture (5), moyennant quoi le bras de pêne (6) tourne au moyen de la barre (7) dans sa seconde extrémité,
**caractérisée en ce que** la porte d'inspection comprend en outre une vis de verrouillage (9) du filet de protection, qui peut être disposée devant le filet de protection, empêchant l'ouverture du filet de protection, et laquelle vis de verrouillage (9) est disposée dans la partie cadre afin qu'il ne puisse être détaché, et le mécanisme de verrouillage de la partie couvercle comprend une saillie (8), qui est fixée à la barre (7) placée sensiblement perpendiculairement par rapport au bras de pêne dans la seconde extrémité du bras de pêne (6) du mécanisme de verrouillage, et laquelle saillie (8) se dépose contre la vis de verrouillage (9) du filet de protection lorsque la partie couvercle de la porte d'inspection est fermée.

2. Porte d'inspection selon la revendication 1, **caractérisée en ce que** la partie couvercle (2) est fixée à la partie cadre (3) sur des charnières.

3. Porte d'inspection selon la revendication 1 ou 2, **caractérisée en ce que** la saillie (8) est une partie fixe du mécanisme de verrouillage.

4. Porte d'inspection selon l'une quelconque des revendications précédentes, **caractérisée en ce que** la partie cadre (3) comprend des bords (11) de la partie cadre qui sont sensiblement verticaux par rapport au filet de protection autour du filet de protection (4).

5. Porte d'inspection selon la revendication 4, **caractérisée en ce que** la vis de verrouillage (9) du filet de protection est disposée à travers le bord (11) autour du filet de protection (4), qui est sensiblement vertical par rapport à la partie cadre et au filet de protection.

6. Porte d'inspection selon l'une quelconque des revendications précédentes, **caractérisée en ce qu'**un écrou de verrouillage (12) est disposé dans la seconde extrémité de la vis de verrouillage (9) du filet de protection.

7. Porte d'inspection selon l'une quelconque des revendications précédentes, **caractérisée en ce que** la largeur et la hauteur de l'ouverture dans la partie cadre (3) de la porte d'inspection sont de 40 à 80 cm.

8. Dispositif de manutention de matériau, qui comprend une porte d'inspection selon l'une quelconque des revendications 1 à 7 précédentes.
